# EUROPÄISCHE PATENTSCHRIFT

(11) **EP 2 394 867 B1**
(45) Veröffentlichungstag und Bekanntmachung des Hinweises auf die Patenterteilung: **04.03.2015**
(21) Anmeldenummer: 11164638.6
(22) Anmeldetag: 03.05.2011
(51) Int. Cl.: B60R 21/13

(54) **Überrollschutzsystem für Kraftfahrzeuge**
Rollover protection for motor vehicles
Système de protection contre les tonneaux pour des véhicules automobiles

(43) Veröffentlichungstag der Anmeldung: 14.12.2011
(73) Patentinhaber: Metalsa Automotive GmbH, 51702 Bergneustadt (DE)
(72) Erfinder: Jesse, Rainer, 51702, Bergneustadt (DE)
(74) Vertreter: Kalkoff & Partner

(56) Entgegenhaltungen:
- EP-A2- 1 186 481
- DE-A1- 19 750 457
- DE-C1- 19 838 989

## Beschreibung

Die Erfindung betrifft ein Überrollschutzsystem für Kraftfahrzeuge, mit
- einem fahrzeugfest anordbaren Grundkörper,
- einem gegenüber dem Grundkörper zwischen einer Lagerungsposition und einer Überschlagsposition verstellbaren Überrollkörper,
- einer den Überrollkörper in Richtung auf die Überschlagsposition vorspannenden Antriebseinheit und
- einer den Überrollkörper in der Lagerungsposition arretierenden Verriegelungseinheit mit
   - einem in Richtung auf eine an dem Überrollkörper angeordneten Rastleiste vorgespannten Rastelement, das zwischen einer den Überrollkörper arretierenden Verriegelungsstellung und einer den Überrollkörper freigebenden Entriegelungsstellung verstellbar an einem Rastelementeträger angeordnet ist.

Aktive Überrollschutzsysteme der eingangs genannten Art sind in vielfältigen Ausgestaltungen aus dem Stand der Technik bekannt und werden üblicherweise in Cabriolets eingesetzt, um bei einem Überschlag des Fahrzeugs den Fahrzeuginsassen einen ausreichend großen Überlebensraum bereitzustellen, nachdem die Fahrzeugdachstruktur derartiger Fahrzeuge hier keinen ausreichenden Schutz bietet.

Dokument DE19838989 offenbart ein Überrollschutzsystem für Kraftfahrzeuge.

Im Gefahrenfall, d. h. bei einem Unfall mit einem möglicherweise drohenden Überschlag erfolgt sensorgesteuert eine Verlagerung des im Normalzustand in der Lagerungsposition abgelegten und dabei weitestgehend nicht sichtbaren Überrollkörpers in die Überschlagsposition. Bei den gattungsgemäßen Überrollschutzsystemen liefert dabei eine Antriebseinheit, in der Regel eine vorgespannte Antriebsfeder, welche den Überrollkörper in Richtung auf die Überschlagsposition vorspannt, die zur Verstellung notwendige Antriebsenergie. Zur Arretierung und Freigabe des Überrollkörpers in der Lagerungs- sowie Überschlagsposition dient eine Verriegelungseinheit des Überrollschutzsystems, welche derart ausgestaltet ist, dass im Gefahrenfall eine unmittelbare Freigabe des Überrollkörpers ermöglicht wird. Darüber hinaus dient die Verriegelungseinheit auch zur Arretierung des Überrollkörpers in der

Überschlagsposition, wodurch eine Rückverlagerung des Überrollkörpers in Richtung auf die Lagerungsposition wirkungsvoll verhindert wird. Zur Festlegung der einzelnen Betriebspositionen des Überrollkörpers weist dieser eine Rastleiste auf, welche mit einem entsprechend ausgebildeten Rastelement an der Verriegelungseinheit zusammenwirkt. Das Rastelement ist dabei zwischen einer den Überrollkörper arretierenden Verriegelungsstellung und einer den Überrollkörper freigebenden Entriegelungsstellung verstellbar.

Bei den Überrollschutzsystemen der eingangs genannten Art erfolgt eine Verlagerung des Überrollkörpers in die Überschlagsposition bereits im Gefahrenfall. Eine Aktivierung des Überrollschutzsystems kann daher auch bei minderschweren Unfällen stattfinden, die letztlich jedoch nicht zu einem Überschlag des Fahrzeugs führen. Um bei den dann noch fahrbereiten Fahrzeugen ein zuvor geöffnetes Dach zu schließen, ist es in der Regel erforderlich, den Überrollkörper zu reversieren, d. h. diesen entgegen der vorspannenden Antriebseinheit manuell in die Lagerungsposition zurückzudrücken. Obgleich eine Schließung des Dachs vielfach auch bei einer nur teilweise erfolgten Rückverlagerung des Überrollkörpers in Richtung auf die Lagerungsposition möglich wäre, erlauben bekannte Systeme keinerlei Arretierung des Überrollkörpers in Zwischenpositionen, sondern fordern eine vollständige Verlagerung des Überrollkörpers bis in die Lagerungsposition, um den Überrollkörper zu arretieren. Der hierzu erforderliche Kraftaufwand kann jedoch nicht von jeder Person aufgebracht werden, so dass derartige Fahrzeugnutzer keinerlei Möglichkeit haben, ein geöffnetes Fahrzeugdach in eine geschlossene Stellung zu überführen und die fahrbereiten Fahrzeuge zu nutzen oder zumindest vor Regen zu schützen.

Der Erfindung liegt die Aufgabe zugrunde, ein Überrollschutzsystem der eingangs genannten Art mit der Möglichkeit einer Rückverlagerung des Überrollkörpers aus der Überschlagsposition in Richtung auf die Lagerungsposition sowie einer Arretierung des Überrollkörpers auch in teilrückverlagerten Stellungen zu schaffen.

Die Erfindung löst die Aufgabe durch ein Überrollschutzsystem mit den Merkmalen des Anspruchs 1. Vorteilhafte Weiterbildungen der Erfindung sind in den abhängigen Ansprüchen angegeben.

Kennzeichnend für das erfindungsgemäße Überrollschutzsystem ist, dass an der Verriegelungseinheit ein zwischen einer das Rastelement in der Verriegelungsstellung festlegenden Blockierlage und einer das Rastelement freigebenden Öffnungslage verstellbares Sperrelement sowie ein manuell zwischen einer Betriebsposition und einer Eingriffsposition verstellbares Betätigungselement zur Verlagerung des Rastelements aus der Verriegelungsstellung in die Entriegelungsstellung angeordnet ist. Das Betätigungselement ist dabei derart mit dem Sperrelement verbunden, dass eine manuelle Verstellung des Betätigungselements aus der Betriebsposition in die Eingriffsposition eine Verlagerung des Sperrelements aus der Blockierlage in die Öffnungslage bewirkt. Ferner ist an dem Sperrelement eine Antriebsvorrichtung zu einer von dem Betätigungselement unabhängigen Verlagerung des Sperrelements aus der Blockierlage in die Öffnungslage angeordnet.

Wesentliche Elemente der Verriegelungseinheit sind neben dem Rastelement, welches der Festlegung des Überrollkörpers dient, das Sperrelement sowie das Betätigungselement. Das Sperrelement ist zwischen der Blockierlage und der Öffnungslage verstellbar. In der Blockierlage verhindert das Sperrelement eine Verlagerung des Rastelements in dessen Entriegelungsstellung und gewährleistet somit eine zuverlässige Arretierung der durch das Zusammenwirken von Rastelement und Rastleiste festgelegten Position des Überrollkörpers. Um eine Verlagerung des Rastelements in dessen Entriegelungsstellung zu ermöglichen, so dass der Überrollkörper verlagerbar ist, ist es zunächst erforderlich, das Sperrelement in die Öffnungslage zu verlagern, in welcher das Sperrelement das Rastelement freigibt.

Nachdem somit die Verlagerbarkeit des Rastelements von der Position des Sperrelements abhängt, ist an dem Sperrelement eine Antriebsvorrichtung vorgesehen, dessen Aktivierung eine schlagartige Verlagerung des Sperrelements aus der Blockierlage in die Öffnungslage bewirkt, so dass dann im Gefahrenfall eine unmittelbare Verlagerung des Rastelements aus der Verriegelungsstellung in die Entriegelungsstellung und damit eine Verlagerung des Überrollkörpers in die Überschlagsposition erfolgen kann.

Aufgrund der Vorspannung des Rastelements in Richtung auf die Rastleiste des Überrollkörpers liegt das Rastelement im ansonsten unbelasteten Zustand an der Rastleiste an. Die Rastleiste und das Rastelement sind dabei derart ausgestaltet, dass eine Bewegung des Überrollkörpers entgegen dessen Aufstellbewegung, d. h. in Richtung auf die Lagerungsposition, eine sofortige Verlagerung des Rastelements in dessen Verriegelungsstellung bewirkt, wodurch eine weitere Bewegung des Überrollkörpers in Richtung auf die Lagerungsposition verhindert wird, so dass der Überrollkörper dann in der eingestellten Position festgelegt ist. Aufgrund der in der Regel nur kurzfristig wirkenden Antriebsvorrichtung kann dann auch das Sperrelement wieder in der Verriegelungsstellung des Überrollkörpers in die Blockierlage gelangen, so dass in ergänzender Weise eine Sicherung der Position des Überrollkörpers gewährleistet wäre, nachdem hierdurch erneut eine Verlagerung des Rastelements in die Entriegelungsstellung blockiert ist.

Für eine Rückverlagerung des Überrollkörpers ist es somit zunächst erforderlich, das Sperrelement erneut aus der Blockierlage in die Öffnungslage zu verlagern. Nachdem darüber hinaus das Rastelement in Folge dessen Vorspannung in Richtung auf die Rastleiste vorgespannt ist und der Ausgestaltung derart, dass im Falle einer Rückverlagerung des Überrollkörpers das mit der Rastleiste zusammenwirkende Rastelement eine sofortige Verriegelung bewirkt, ist es für eine Rückverlagerung des Überrollkörpers ferner erforderlich, neben einer Verlagerung des Sperrelements auch das Rastelement mit der Rastleiste außer Eingriff zu bringen. Hierzu dient das Betätigungselement der Verriegelungseinheit, welches manuell aus einer Betriebsposition, in der ein normaler Betrieb des Überrollschutzsystems gewährleistet ist, in eine Eingriffsposition verstellt werden kann. Bei der Verstellung des Betätigungselements in Richtung auf die Eingriffsposition wirkt dieses mit dem Rastelement zusammen und überführt dieses dabei in dessen Entriegelungsstellung. Wesentlich ist dabei, dass durch eine Verlagerung des Betätigungselements in Richtung auf die Eingriffsposition auch das Sperrelement in Richtung auf dessen Öffnungslage bewegt wird, so dass insgesamt durch eine Verlagerung des Betätigungselements das Rastelement mit der Rastleiste außer Eingriff gebracht wird.

Das erfindungsgemäße Überrollschutzsystem zeichnet sich somit durch eine Verriegelungseinheit aus, die zunächst die Lagerungsposition des Überrollkörpers sichert. Darüber hinaus ermöglicht die an dem Sperrelement der Verriegelungseinheit angeordnete Antriebsvorrichtung im Gefahrenfall eine unverzügliche Freigabe des Überrollkörpers. In der Überschlagsposition gewährleistet die Verriegelungseinheit ferner eine zuverlässige Sicherung des Überrollkörpers. Darüber hinaus ermöglicht die Verriegelungseinheit des erfindungsgemäßen Überrollschutzsystems nach vorheriger Bedienung des Betätigungselements eine Rückverlagerung des Überrollkörpers in Richtung auf die Lagerungsposition, wobei nach Freigabe des Betätigungselements und eines sich dann erneut einstellenden Zusammenwirkens der Rastleiste mit dem Rastelement eine Arretierung des Überrollkörpers in Positionen zwischen der Überschlagsposition und der Lagerungsposition erfolgt.

Um eine Verlagerung des Überrollkörpers aus der Lagerungsposition in die Überschlagposition bewirken zu können, ist es erforderlich, den Überrollkörper über das die Rastleiste arretierende Rastelement in dessen Entriegelungsstellung zu verlagern. Die Verlagerung kann dabei grundsätzlich in beliebiger Weise, bspw. auch durch separate Antriebsvorrichtungen erfolgen. Nach einer besonders vorteilhaften Ausgestaltung der Erfindung sind das Rastelement und die Rastleiste jedoch derart ausgebildet, dass der in Richtung auf die Überschlagsposition vorgespannte Überrollkörper das Rastelement in der Verriegelungsstellung in Richtung auf die Entriegelungsposition vorspannt. Gemäß dieser Ausgestaltung der Erfindung dient die durch die Antriebseinheit des Überrollkörpers bereitgestellte Vorspannkraft in der Verriegelungsstellung auch dazu, das Rastelement in Richtung auf dessen Entriegelungsstellung zu verlagern. In der Lagerungsposition wird eine Verlagerung des Rastelements aufgrund der durch die Antriebseinheit vorliegenden Vorspannung allein dadurch verhindert, dass das Sperrelement aufgrund seiner Anordnung in der Blockierlage eine Verlagerung des Rastelements blockiert. Das Rastelement und die Rastleiste sind derart ausgebildet, dass über deren Kontaktflächen in der Lagerungsposition ohne die blockierende Wirkung des Sperrelements das Rastelement über die Rastleiste in die Entriegelungsstellung verlagert werden würde.

Diese Weiterbildung der Erfindung gewährleistet somit eine besonders zuverlässige Verstellung des Überrollkörpers im Falle eines drohenden Überschlags, da auf zusätzliche und möglicherweise fehleranfällige Antriebseinheiten zur Verlagerung des Rastelements verzichtet werden kann. Eine Freigabe des Rastelements durch Verlagerung des Sperrelements in die Öffnungslage bewirkt eine unmittelbare Verlagerung des Überrollkörpers.

Die Ausgestaltung des Zusammenwirkens des Sperrelements mit dem Rastelement, insbesondere deren Zusammenwirken in der Blockierlage des Sperrelements ist grundsätzlich frei wählbar. Nach einer besonders vorteilhaften Ausgestaltung der Erfindung liegt das Sperrelement jedoch in der Blockierlage mit einer Sperrfläche an einer Anschlagfläche des in der Verriegelungsstellung angeordneten Rastelements an und ist gegenüber diesem in die Öffnungslage verlagerbar, insbesondere verschiebbar, in der die Anschlagfläche und die Sperrfläche außer Eingriff kommen. Ein flächiges Zusammenwirken von Sperrelement und Rastelement gewährleistet eine sichere Anordnung des Rastelements in der Verriegelungsstellung. Die Sperrfläche verhindert dabei aufgrund dessen Anlage an der Anschlagfläche des Rastelements eine Verlagerung des Rastelements in Richtung auf die Sperrfläche. Zur Verlagerung des Sperrelements in die Öffnungslage muss dieses lediglich gegenüber einem möglicherweise bestehenden Kraftschluss verschoben werden, so dass sowohl im Falle einer manuellen Betätigung wie auch im Gefahrenfall eine zuverlässige Verlagerung des Sperrelements gewährleistet werden kann, da hierfür nur ein geringer Kraftaufwand erforderlich ist.

Die Ausbildung des Rastelements sowie dessen Verlagerung kann grundsätzlich in vielfältiger Weise realisiert werden. So kann das Rastelement bspw. durch einen linear verschiebbaren Rastbolzen oder dergleichen gebildet werden. Nach einer besonders vorteilhaften Ausgestaltung der Erfindung ist das Rastelement jedoch durch eine schwenkbar an dem Rastelementeträger angeordnete Rastklinke und die Rastleiste durch eine Zahnleiste gebildet, wobei die Rastklinke und die Zahnleiste eine aufeinander abgestimmte Verzahnung aufweisen und wobei die Rastklinke in der Verriegelungsstellung mit einer der Zahnleiste abgewandten Anschlagfläche an der Sperrfläche anliegt.

Diese Ausgestaltung der Erfindung ermöglicht durch ein Verschwenken eine einfache und zuverlässige Verstellung der Rastklinke, sowohl zur Freigabe als auch zur Arretierung des Überrollkörpers. Insbesondere erlaubt diese Ausgestaltung der Erfindung in einfacher Weise die nach einer vorteilhaften Weiterbildung vorgesehene Ausgestaltung von Rastelement und Rastleiste derart, dass der Überrollkörper das Rastelement in der Verriegelungsstellung in Richtung auf die Entriegelungsposition vorspannt. Gleichzeitig erlaubt diese Weiterbildung der Erfindung auch eine einfache Ausgestaltung des Zusammenwirkens von Rastklinke und Sperrelement. Zur Verlagerung der Rastklinke in die Entriegelungsstellung muss diese nur in Richtung auf das Sperrelement verschwenkt werden, bis die Rastklinke mit der Rastleiste außer Eingriff gelangt. In der Blockierlage des Sperrelements liegt dabei die Rastklinke mit einer der Zahnleiste abgewandten Anschlagfläche an der Sperrfläche des Sperrelements an. Zur Verlagerung des Sperrelements ist es erforderlich, dieses gegenüber der Anschlagfläche zu verschieben, bis die Sperrfläche mit der Anschlagfläche außer Eingriff gelangt, so dass dann die Rastklinke in Richtung auf ihre Entriegelungsstellung verschwenkt. Insgesamt stellt diese Weiterbildung der Erfindung somit eine einfache und kostengünstige sowie besonders zuverlässige Ausgestaltung dar.

Zur Verlagerung des Überrollkörpers im Gefahrenfall ist es - wie eingangs dargestellt - erforderlich, das Sperrelement schlagartig in die Öffnungslage zu bewegen, wozu bei dem erfindungsgemäßen Überrollschutzsystem eine Antriebsvorrichtung vorgesehen ist. Die Antriebsvorrichtung kann grundsätzlich in beliebiger Weise ausgestaltet werden, wobei hierzu auch federwirkende Elemente eingesetzt werden können. Nach einer besonders vorteilhaften Ausgestaltung der Erfindung ist die Antriebsvorrichtung jedoch durch einen pyrotechnischen Aktuator, insbesondere einen Mikrogasgenerator gebildet. Der Mikrogasgenerator ist mit dem Sperrelement derart verbunden, dass eine Aktivierung eine Verlagerung des Sperrelements in dessen Öffnungslage bewirkt. Ein pyrotechnischer Aktuator, insbesondere ein Mikrogasgenerator, zeichnet sich dabei dadurch aus, dass dieser einen nur geringen Bauraum benötigt und eine besonders zuverlässige Verlagerung des Sperrelements im Gefahrenfall gewährleistet. Nach einer Auslösung des Systems ist es zu dessen Reinitialisierung lediglich erforderlich, den aktivierten Mikrogasgenerator zu tauschen, welcher hierzu besonders vorteilhafterweise lösbar mit dem Sperrelement verbunden ist.

Wie bereits eingangs dargelegt, dient das Betätigungselement zur manuellen Verlagerung des Rastelements aus dessen Verriegelungsstellung in die Entriegelungsstellung, wobei aufgrund der bestehenden Kopplung von Betätigungselement und Sperrelement das Sperrelement gleichzeitig in die für die Verlagerung des Rastelements erforderliche Öffnungslage verstellt wird. Die Ausgestaltung des Betätigungselements derart, dass es eine Verlagerung des Rastelements bewirkt, ist grundsätzlich frei wählbar. Nach einer besonders vorteilhaften Ausgestaltung der Erfindung weist das Betätigungselement jedoch einen bei dessen Verlagerung aus der Betriebsposition in die Eingriffsposition mit dem Rastelement in Eingriff gelangendes und dieses dabei in die Entriegelungsstellung verlagerndes Stellelement auf. Das Stellelement, welches in der Betriebsposition mit dem Rastelement außer Eingriff ist und somit dessen freie Bewegbarkeit gewährleistet, bewirkt somit aufgrund dessen Bewegungsbahn bei einer Verlagerung des Betätigungselements in Richtung auf die Eingriffsposition eine Verstellung des Rastelements, bis dieses mit der Rastleiste außer Eingriff gelangt. Das Stellelement kann bspw. durch einen Steg oder Bolzen gebildet sein, welcher besonders vorteilhafterweise an einer der Rastleiste zugewandten Stirnseite des Rastelements anliegt, wobei aufgrund des Verstellwegs des Stellelements das Rastelement in die Entriegelungsstellung bewegt wird. Die Verwendung eines Stellelements, insbesondere eines an der Stirnseite des Rastelements anliegenden Stellelements zeichnet sich somit durch seine einfache und zugleich zuverlässige Möglichkeit aus, das Rastelement, insbesondere eine Rastklinke, in die Entriegelungsstellung zu überführen.

Für die Funktionsweise des erfindungsgemäßen Überrollschutzsystems ist es - wie eingangs dargestellt - erforderlich, dass eine Betätigung des Betätigungselements auch eine Verlagerung des Sperrelements in die Öffnungslage bewirkt. Obgleich in Abhängigkeit von der Ausgestaltung der Antriebsvorrichtung des Sperrelements grundsätzlich eine starre Kopplung von Betätigungselement und Sperrelement möglich ist, ist nach einer Weiterbildung der Erfindung vorgesehen, dass das Betätigungselement derart mit dem Sperrelement verbunden ist, dass das Sperrelement relativ gegenüber dem Betätigungselement verstellbar ist.

Gemäß dieser Ausgestaltung der Erfindung gelangt somit bei einer Aktivierung der Antriebsvorrichtung des Sperrelements das Betätigungselement bzw. dessen Stellelement nicht mit der Rastklinke in Eingriff und blockiert somit auch nicht eine Bewegung des Rastelements in Richtung auf dessen Verriegelungsstellung. Aufgrund der erfindungsgemäßen Ausgestaltung der Erfindung derart, dass das Rastelement in Richtung auf die Rastleiste vorgespannt ist, wird somit gewährleistet, dass im Falle einer in Richtung auf die Lagerungsposition stattfindenden Bewegung des Überrollkörpers dieser zuverlässig arretiert wird, wobei die Rastleiste und das Rastelement zusammenwirken und das Rastelement den Überrollkörper verriegelt.

Die Ausgestaltung der freien Verschiebbarkeit des Sperrelements gegenüber dem Betätigungselement ist dabei grundsätzlich frei wählbar, wobei hierzu bspw. auch Kulissen bzw. Kulissenführungen verwendet werden können, die an die Verstellwege des Betätigungselements und des Sperrelements angepasst sind. Nach einer besonders vorteilhaften Ausgestaltung der Erfindung ist das Betätigungselement jedoch über ein in einer Ausnehmung an dem Sperrelement angeordnetes Kopplungselement, insbesondere eine Lasche mit dem Sperrelement verbunden, wobei das Kopplungselement in der Betriebsposition des Betätigungselements und der Blockierlage des Sperrelements an einer in Richtung auf die Eingriffsposition des Betätigungselements angeordneten Innenfläche der Ausnehmung anliegt.

Gemäß dieser Ausgestaltung der Erfindung gewährleistet die über das Kopplungselement hergestellte Verbindung des Betätigungselements mit dem Sperrelement im Falle einer Bedienung des Betätigungselements aufgrund der Anlage des Kopplungselements an der Innenfläche der Ausnehmung eine umgehende Verlagerung des Sperrelements in dessen Öffnungslage. Infolge der Betätigung des Betätigungselements verstellt das Kopplungselement das Sperrelement aufgrund der Anlage des Kopplungselements an der Innenfläche der Ausnehmung in Richtung auf die Öffnungslage. Gleichzeitig gewährleistet diese Ausgestaltung aufgrund der Verwendung einer Ausnehmung, in welcher das Kopplungselement angeordnet ist, eine Verschiebbarkeit des Sperrelements gegenüber dem Betätigungselement, ohne dass es hierbei zu einer Verlagerung des Betätigungselements kommt. Besonders vorteilhafterweise ist die Ausnehmung dabei derart ausgebildet, dass sie die freie Verschiebbarkeit des Sperrelements gegenüber dem Betätigungselement aus der Blockierlage in die Öffnungslage erlaubt. Demgemäß ist die Ausnehmung an den Verstellweg des Sperrelements angepasst. Bei einer linearen Verstellbewegung des Sperrelements aus der Blockierlage in die Öffnungslage entspricht die Länge der Ausnehmung somit der Länge des Verstellweges des Sperrelements.

Nach einer besonders vorteilhaften Ausgestaltung der Erfindung ist das Betätigungselement in der Betriebsposition lösbar verriegelt. Gemäß dieser Ausgestaltung der Erfindung ist es vor einer Verlagerung des Betätigungselements erforderlich, dieses zunächst zu Entriegeln. Die Ausgestaltung der Verriegelung ist dabei grundsätzlich frei wählbar, wobei bspw. eine Verriegelung möglich ist, bei der das Betätigungselement zuvor linear verstellt, zusammengedrückt oder eine separate Verriegelung aufgelöst werden muss. Diese Ausgestaltung der Erfindung sichert die Verriegelungseinheit gegenüber Fehlbedienungen, nachdem eine Bedienung des Betätigungselements zuvor eine bewusste Aufhebung der bestehenden Verriegelung erforderlich macht.

Die Anordnung der einzelnen Bauteile des Überrollschutzsystems ist grundsätzlich frei wählbar. Nach einer besonders vorteilhaften Ausgestaltung der Erfindung sind das Sperrelement und das Betätigungselement jedoch verschiebbar am Rastelementeträger gelagert. Diese Ausgestaltung der Erfindung ermöglicht bei einer hohen Funktionssicherheit eine besonders kompakte und kostengünstige Ausgestaltung des erfindungsgemäßen Überrollschutzsystems, nachdem auf weitere Lagerungsbauteile verzichtet werden kann. Besonders vorteilhafterweise ist der Rastelementeträger dabei ortsfest und das Betätigungselement und das Sperrelement verschiebbar an einem Grundträger gelagert. Nachdem der Grundträger darüber hinaus nach einer besonders vorteilhaften Ausgestaltung der Erfindung auch zur Anordnung des Überrollschutzsystems an einem Fahrzeug genutzt werden kann, ermöglicht diese Ausgestaltung der Erfindung einen besonders platzsparenden und kostengünstigen Aufbau des Überrollschutzsystems. Auf weitere Gehäuse zur Aufnahme oder Anordnung der Verriegelungsvorrichtung kann gemäß dieser Ausgestaltung der Erfindung verzichtet werden.

Zur Erleichterung der Bedienung des Betätigungselements ist nach einer weiteren Ausgestaltung der Erfindung vorgesehen, dass dieses zur manuellen Bedienung Griffelemente aufweist. Die Griffelemente erlauben dabei eine besonders komfortable Bedienung, ohne dass hierfür ergänzende Hilfsmittel oder Werkzeuge erforderlich sind, obgleich das Betätigungselement auch zur Anordnung von Werkzeugen ausgebildet sein kann.

Ein Ausführungsbeispiel der Erfindung wird nachstehend mit Bezug auf die Zeichnungen erläutert. In den Zeichnungen zeigen:
- Fig. 1: eine perspektivische Ansicht eines Überrollschutzsystems in einer Lagerungsposition des Überrollkörpers;
- Fig. 2: eine perspektivische Ansicht des Überrollschutzsystems von Fig. 1 in einer Überschlagsposition des Überrollkörpers;
- Fig. 3: eine vergrößerte Darstellung des Verriegelungssystems des Überrollschutzsystems von Fig. 1 im Zusammenwirken mit dem Überrollkörper in dessen Überschlagsposition;
- Fig. 4: eine vergrößerte Darstellung des Verriegelungssystems des Überrollschutzsystems von Fig. 1 in einer Explosionsdarstellung in der Lagerungsposition des Überrollkörpers;
- Fig. 5: eine vergrößerte Darstellung des Verriegelungssystems des Überrollschutzsystems von Fig. 1 in der Lagerungsposition des Überrollkörpers;
- Fig. 6: eine vergrößerte Darstellung des Verriegelungssystems des Überrollschutzsystems von Fig. 1 mit einem sich aus der Lagerungsposition in die Überschlagsposition verlagernden Überrollkörper;
- Fig. 7: eine vergrößerte Darstellung der Verriegelungseinheit des Überrollschutzsystems von Fig. 1 in einer den Überrollkörper in der Überschlagsposition arretierenden Verriegelungsstellung;
- Fig. 8: eine vergrößerte Darstellung der Verriegelungseinheit des Überrollschutzsystems von Fig. 1 in einer reversierbaren Position des Überrollkörpers und
- Fig. 9: eine vergrößerte Darstellung der Verriegelungseinheit des Überrollschutzsystems von Fig. 1 in einer den Überrollkörper in einer Zwischenposition arretierenden Stellung.

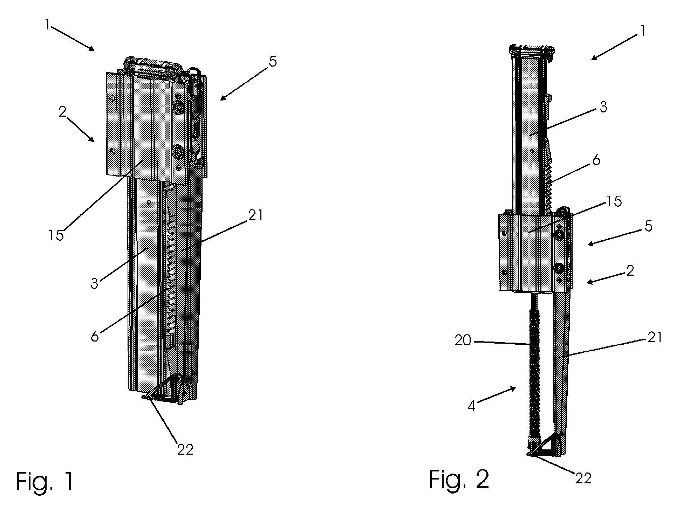

In Fig. 1 ist eine Ausführungsform eines Überrollschutzsystems 1 mit einem in einer Lagerungsposition angeordneten Überrollkörper 3 dargestellt. Der Überrollkörper 3 ist im Gefahrenfall, d. h. bei einem drohenden Überschlag aus der in Fig. 1 dargestellten Lagerungsposition in die in Fig. 2 dargestellte Überschlagsposition verstellbar, in der der Überrollkörper 3 gegenüber einem fahrzeugfest anordbaren Grundträger 15 eines Grundkörpers 2 verlagert ist. Zum Antrieb des Überrollkörpers 3 aus der Lagerungsposition in die Überschlagsposition dient eine eine Antriebseinheit 4 bildende Schraubendruckfeder 20, welche den Überrollkörper 3 in der Lagerungsposition in Richtung auf die Überschlagsposition vorspannt. Die Schraubendruckfeder 20 liegt dabei an ihrem dem Überrollkörper 3 gegenüberliegenden Ende an einem Stützelement 22 an, welches über einen Träger 21 mit dem fahrzeugfest anordbaren Grundträger 15 verbunden ist.

Zur Festlegung des Überrollkörpers 3 in der Lagerungsposition und Überschlagsposition sowie ferner um den Überrollkörper 3 nach einer Verlagerung in die Überschlagsposition in Richtung auf die Lagerungsposition zu verstellen und in zwischen der Überschlags- und Lagerungsposition liegenden Positionen arretieren zu können, dient eine Verriegelungseinheit 5, welche ortsfest an dem Grundträger 15 befestigt ist.

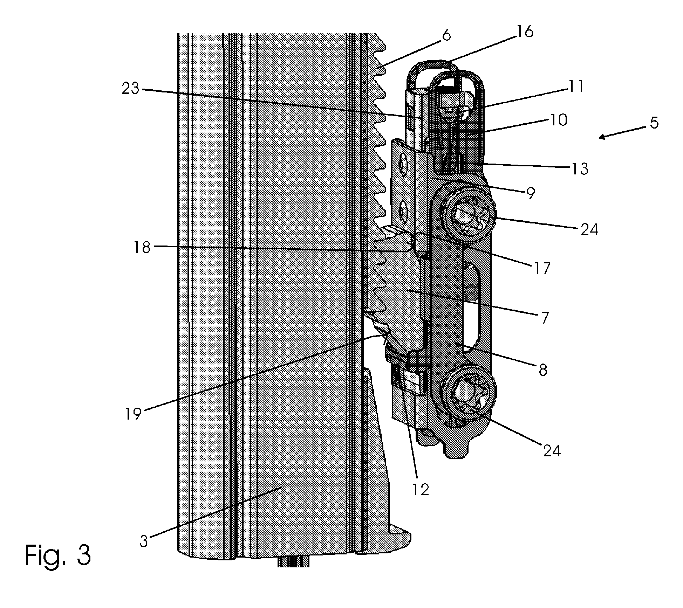

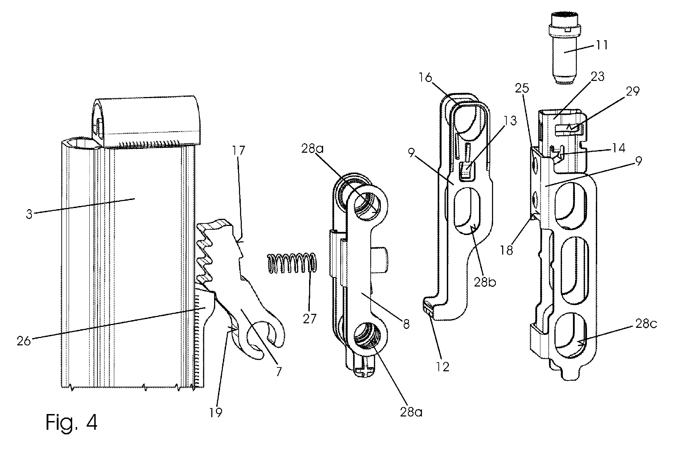

Die Verriegelungseinheit 5 weist als zentrales Bauteil zur Arretierung des Überrollkörpers 3 ein als Rastklinke 7 ausgebildetes Rastelement auf, welche zwischen einer Verriegelungsstellung und einer Entriegelungsstellung verstellbar ist. In der Verriegelungsstellung befindet sich die Rastklinke 7 mit einer dem Überrollkörper 3 zugewandten Verzahnung in Eingriff mit einer an dem Überrollkörper 3 angeordneten, als Zahnleiste 6 ausgebildeten Rastleiste, welche an einer der Rastklinke 7 zugewandten Stirnseite des Überrollkörpers 3 angeordnet ist und neben einer an die Verzahnung der Rastklinke 7 angepassten Verzahnung ein Arretierungselement 26 aufweist (vgl. Fig. 3 und 4).

Die Rastklinke 7 ist in Richtung auf die Zahnleiste 6 vorgespannt, wobei die Vorspannung durch eine Rastelementefeder 27 erreicht wird, welche einerseits an einer dem Überrollkörper 3 abgewandten Seite der Rastklinke 7 und andererseits an dem Rastelementeträger 8 abgestützt ist, wobei der Rastelementeträger 8 auch zur schwenkbaren Aufnahme der Rastklinke ₇ dient. An dem Rastelementeträger 8 sind ferner ein Sperrelement 9 sowie ein Betätigungselement 10 der Verriegelungseinheit 5 verschiebbar angeordnet.

Das Sperrelement 9 ist an dem Rastelementeträger 8 zwischen einer Blockierlage und einer Öffnungslage verstellbar. In der Blockierlage liegt die Rastklinke 7 mit einer Anschlagfläche 17 an einer Sperrfläche 18 des Sperrelements 9 an, welches somit eine Schwenkbewegung der Rastklinke 7 aus der Verriegelungsstellung in die Entriegelungsstellung verhindert. Um eine solche Verlagerung zu ermöglichen, muss das Sperrelement 9 entlang des Rastelementeträgers 8 verschoben werden, bis die Sperrfläche 18 mit der Anschlagfläche 17 außer Eingriff gelangt, so dass dann die Möglichkeit besteht, die Rastklinke 7 entgegen der Vorspannung durch die Rastelementefeder 27 in ihre Entriegelungsstellung zu verschwenken.

An dem Sperrelement 9 ist ferner eine Aufnahme 23 über Befestigungsnieten 25 angeordnet, welche zur Anordnung eines als Antriebsvorrichtung ausgebildeten Mikrogasgenerators 11 dient. Hierzu weist die Aufnahme 23 eine Aufnahmeöffnung 29 auf, welche eine formschlüssige Anordnung des Mikrogasgenerators 11 ermöglicht. Eine Aktivierung des Mikrogasgenerators 11 bewirkt eine Verstellung des Sperrelements 9 aus dessen Blockierlage in die Öffnungslage, so dass eine Verlagerung der Rastklinke 7 in die Entriegelungsstellung möglich ist.

Das ebenfalls verschiebbar an dem Rastelementeträger 8 angeordnete Betätigungselement 10 dient zur manuellen Verlagerung der Rastklinke 7 aus der Verriegelungsstellung in die Entriegelungsstellung, wobei gleichzeitig, nämlich bei einer Verlagerung des Betätigungselements 10 aus einer Betriebsposition in eine Eingriffsposition, das Sperrelement 9 aus der Blockierlage in die Öffnungslage bewegt wird. Das Betätigungselement 10 weist hierzu ein Stellelement 12 auf, welches an einer Stirnseite 19 der Rastklinke 7 anliegt und aufgrund der Geometrie der Stirnseite 19 bei einer Verlagerung des Betätigungselements 10 in die Eingriffsposition ein Verschwenken der Rastklinke 7 in die Entriegelungsstellung bewirkt.

Über eine Lasche 13, welche in einer Ausnehmung 14 der Aufnahme 23 angeordnet ist und damit das Betätigungselement 10 mit dem Sperrelement 9 koppelt, bewirkt eine Verlagerung des Betätigungselements 10 aus der Betriebsposition in die Eingriffsposition auch eine Verlagerung des Sperrelements 9 aus der Blockierlage in die Öffnungslage. Aufgrund der Ausgestaltung der Kopplung, nämlich der die Lasche 13 aufnehmenden Ausnehmung 14 hat eine Verlagerung des Sperrelements 9 jedoch keine Verlagerung des Betätigungselements 10 zur Folge, da die Ausnehmung 14 sich bei einer Verlagerung des Sperrelements 9 relativ gegenüber der Lasche 13 bewegt, ohne mit dieser in Formschluss zu gelangen.

Die Rastklinke 7, der Grundträger 15, das Betätigungselement 10 und das Sperrelement 9 sind über Befestigungsschrauben 24, welche sich durch Befestigungsöffnungen 28a-28c dieser Bauteile erstrecken, aneinander angeordnet, wobei die Befestigungsöffnungen 28a-28c derart ausgebildet sind, dass die Rastklinke 7 ortsfest und das Betätigungselement 10 und das Sperrelement 9 verschiebbar an dem Rastelementeträger 8 angeordnet sind (vgl. Fig. 4).

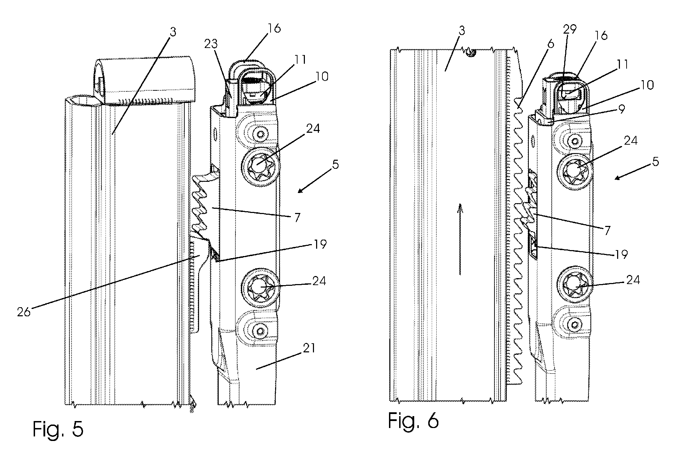

Die Funktionsweise der Verriegelungseinheit 5 des in den Figuren 1 und 2 dargestellten Überrollschutzsystems 1 wird nachfolgend mit Bezug auf die Figuren 5-9, in denen die unterschiedlichen Betriebszustände der Verriegelungsvorrichtung dargestellt sind, erläutert.

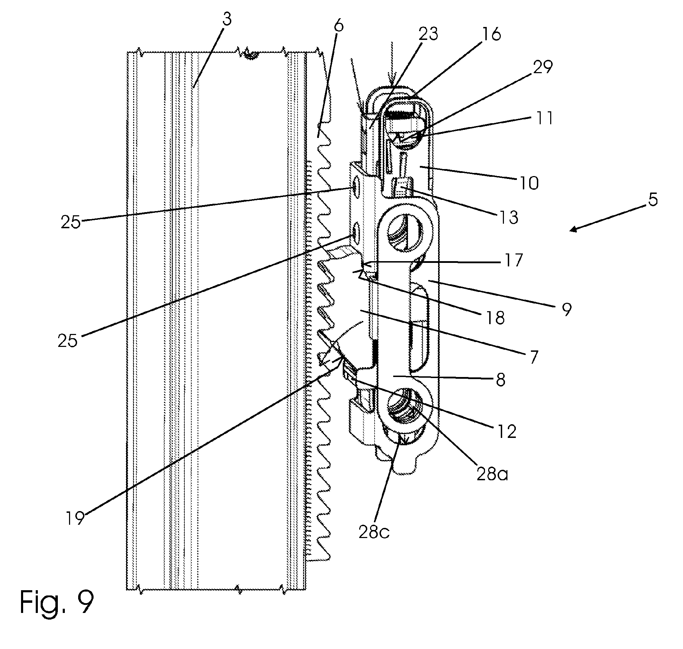

In Fig. 5 ist die Position des Überrollkörpers 3 in dessen Lagerungsposition dargestellt, in der der Überrollkörper 3 in der Einbaulage an einem hier nicht dargestellten Kraftfahrzeug in der Regel nicht sichtbar hinter den Kraftfahrzeugsitzen angeordnet ist. Der Überrollkörper 3 ist entgegen der durch die Schraubendruckfeder 20 aufgebrachten Vorspannkraft durch die Verriegelungsvorrichtung 5 arretiert. Hierzu liegt die Rastklinke 7 an einem Arretierungselement 26, welches Bestandteil der an dem Überrollkörper 3 angeordneten Zahnleiste 6 ist und welche darüber hinaus ein an die Rastklinke 7 angepasstes Zahnprofil aufweist, an. In der Eingriffslage der Rastklinke 7 mit dem Arretierungselement 26 blockiert die Rastklinke 7 eine Verstellung des Überrollkörpers 3 in Richtung auf die Überschlagsposition, wobei eine Verstellung der Rastklinke 7 durch das sich in der Blockierlage befindliche Sperrelement 9 verhindert wird. In der Blockierlage des Sperrelements 9 liegt dieses, wie den Fig. 3 und 9 entnehmbar ist, mit seiner Sperrfläche 18 an der Anschlagfläche 17 des Rastelements 7 an. Eine Verschwenkbewegung des Rastelements 7 in Richtung auf dessen Entriegelungsstellung ist somit blockiert.

Aufgrund der Geometrie des Arretierungselements 26 und der Rastklinke 7 sowie des Verstellwegs der Rastklinke 7 aus der Verriegelungsstellung in die Entriegelungsstellung wirkt die durch die Schraubendruckfeder 20 aufgebrachte Vorspannkraft in der Lagerungsposition derart auf die Rastklinke 7, dass diese durch die Schraubendruckfeder 20 auch in Richtung auf die Entriegelungsstellung vorgespannt ist. Dies bedeutet, dass bei einer Auflösung der durch das Sperrelement 9 bewirkten Blockade der Rastklinke 7, nämlich einer Verstellung des Sperrelements 9 in dessen Öffnungslage die Rastklinke 7 durch das Arretierungselement 26 in die Entriegelungsstellung verschwenkt wird.

Bei einer Auslösung des Überrollschutzsystems 1, d. h. bei einem drohenden Überschlag muss folglich eine Verlagerung des Sperrelements 9 aus der Blockierlage in die Öffnungslage stattfinden. Um diese Verstellbewegung des Sperrelements 9 zu erreichen, erfolgt eine Aktivierung des Mikrogasgenerators 11, welcher an der Aufnahme 23 des Sperrelements 9 angeordnet ist. Eine Aktivierung des Mikrogasgenerators 11 bewirkt eine Verlagerung des Sperrelements 9, die dazu führt, dass die Anschlagfläche 17 und die Sperrfläche 18 außer Eingriff gelangen. Infolge dessen wird die Rastklinke 7 in die in Fig. 6 dargestellte Entriegelungsstellung verschwenkt. Die Verzahnungsgeometrie der Rastleiste 6 verhindert bei der Verstellbewegung des Überrollkörpers 3 in Richtung auf die Überschlagsposition dabei, dass die durch die Rastelementefeder 27 in Richtung auf die Zahnleiste 6 vorgespannte Rastklinke 7 in die Verriegelungsstellung gelangt, in der dann das Sperrelement 9 die Rastklinke 7 erneut arretieren würde.

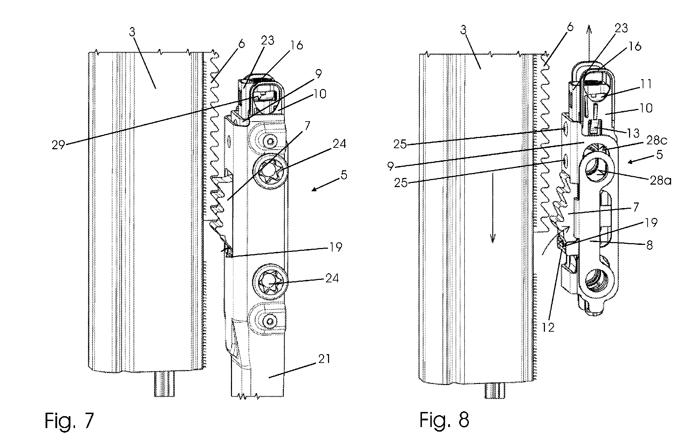

In Fig. 7 ist der Überrollkörper 3 in der Überschlagsposition dargestellt, wobei die Rastklinke ₇ den Überrollkörper 3 gegen eine Verlagerung in Richtung auf die Lagerungsposition durch Zusammenwirken mit der Zahnleiste 6 blockiert. Dabei gewährleistet die Zahngeometrie der Rastklinke 7 und der Zahnleiste 6, dass die Rastklinke 7 unabhängig von der Position des Sperrelements 9 in der Verriegelungsstellung verbleibt, nachdem eine in Richtung auf die Lagerungsposition gerichtete Bewegung des Überrollkörpers 3 eine Rotation der Rastklinke 7 aus der Entriegelungsstellung in die Verriegelungsstellung bewirkt. Die Rastklinke ₇ sichert somit zuverlässig die Position des Überrollkörpers 3 entgegen einer Verstellung in Richtung auf die Lagerungsposition.

Um ein Reversieren des Überrollkörpers 3, d. h. eine Verstellung aus der Überschlagsposition in Richtung auf die Lagerungsposition zu ermöglichen, ist es erforderlich, die Rastklinke 7 mit der Zahnleiste 6 außer Eingriff zu bringen. Hierzu wird, wie in Fig. 8 dargestellt, das Betätigungselement 10 über die Griffelemente 16-bezogen auf die zeichnerische Darstellung - nach oben gezogen. Dabei gelangt das Stellelement 12 mit der Stirnseite 19 der Rastklinke ₇ in Eingriff und verschwenkt die Rastklinke 7 dabei in Richtung auf dessen Entriegelungsstellung. Nachdem für eine solche Verschwenkbewegung der Rastklinke 7 das Sperrelement 9 in die Öffnungslage bewegt werden muss, wirkt beim Betätigen des Betätigungselements 10 dieses über die Lasche 9, welche in der Ausnehmung 14 der Aufnahme 23 angeordnet ist, mit dem Sperrelement 9 zusammen und verschiebt dieses in die Öffnungslage. Die durch die Bedienung des Betätigungselements 10 erreichte Entriegelung ermöglicht eine manuelle Verschiebung des Überrollkörpers 3 in Richtung auf die Lagerungsposition.

Nach Beendigung der Betätigung des Betätigungselements 10 gelangt die Rastklinke 7 aufgrund der durch die Rastklinkenfeder 27 vorliegenden Vorspannung erneut in Eingriff mit der Rastleiste 6 und arretiert dann die eingestellte Position des Überrollkörpers 3. Das in die Blockierlage verschobene Sperrelement 9 verhindert dabei eine Rotation der Rastklinke 7 aufgrund der infolge der Reversierung des Überrollkörpers 3 aufgebauten Vorspannung der Schraubendruckfeder 20, welche aufgrund der Zahngeometrie der Rastklinke 7 und der Zahnleiste 6 die Rastklinke 7 erneut in Richtung auf die Entriegelungsstellung vorspannt.

## Patentansprüche

1. Überrollschutzsystem für Kraftfahrzeuge, mit
- einem fahrzeugfest anordbaren Grundkörper (2),
- einem gegenüber dem Grundkörper (2) zwischen einer Lagerungsposition und einer Überschlagsposition verstellbaren Überrollkörper (3),
- einer den Überrollkörper (3) in Richtung auf die Überschlagsposition vorspannenden Antriebseinheit (4) und
- einer den Überrollkörper (3) in der Lagerungsposition arretierenden Verriegelungseinheit (5) mit
- einem in Richtung auf eine an dem Überrollkörper (3) angeordneten Rastleiste (6) vorgespannten Rastelement (7), das zwischen einer den Überrollkörper (3) arretierenden Verriegelungsstellung und einer den Überrollkörper (3) freigebenden Entriegelungsstellung verstellbar an einem Rastelementeträger (8) angeordnet ist,
**dadurch gekennzeichnet, dass**
an der Verriegelungseinheit (5)
- ein zwischen einer das Rastelement (7) in der Verriegelungsstellung festlegenden Blockierlage und einer das Rastelement (7) freigebenden Öffnungslage verstellbares Sperrelement (9) sowie
- ein manuell zwischen einer Betriebsposition und einer Eingriffsposition verstellbares Betätigungselement (10) zur Verlagerung des Rastelements (7) aus der Verriegelungsstellung in die Entriegelungsstellung,
angeordnet ist,
- wobei das Betätigungselement (10) derart mit dem Sperrelement (9) verbunden ist, dass eine manuelle Verstellung des Betätigungselements (10) aus der Betriebsposition in die Eingriffsposition eine Verlagerung des Sperrelements (9) aus der Blockierlage in die Öffnungslage bewirkt und wobei an dem Sperrelement (9) eine Antriebsvorrichtung (11) zur Verlagerung des Sperrelements (9) aus der Blockierlage in die Öffnungslage angeordnet ist.

2. Überrollschutzsystem für Kraftfahrzeuge nach Anspruch 1, **dadurch gekennzeichnet, dass** das Rastelement (7) und die Rastleiste (6) derart ausgebildet sind, dass der in Richtung auf die Überschlagsposition vorgespannte Überrollkörper (3) das Rastelement (7) in der Verriegelungsstellung in Richtung auf die Entriegelungsposition vorspannt.

3. Überrollschutzsystem für Kraftfahrzeuge nach Anspruch 1 oder 2, **dadurch gekennzeichnet, dass** das Sperrelement (9) in der Blockierlage mit einer Sperrfläche (18) an einer Anschlagfläche (17) des in der Verriegelungsstellung angeordneten Rastelements (7) anliegt und gegenüber diesem in die Öffnungslage verlagerbar, insbesondere verschiebbar ist, in der die Anschlagfläche (17) und die Sperrfläche (18) außer Eingriff kommen.

4. Überrollschutzsystem für Kraftfahrzeuge nach einem der vorhergehenden Ansprüche, **dadurch gekennzeichnet, dass** das Rastelement durch eine schwenkbar an dem Rastelementeträger (8) angeordnete Rastklinke (7) und die Rastleiste durch eine Zahnstange (6) gebildet sind, die eine aufeinander abgestimmte Verzahnung aufweisen, wobei die Rastklinke (7) in der Verriegelungsstellung mit einer der Verzahnung abgewandten Anschlagfläche (17) an der Sperrfläche (18) anliegt.

5. Überrollschutzsystem für Kraftfahrzeuge nach einem der vorhergehenden Ansprüche, **dadurch gekennzeichnet, dass** die das Sperrelement (9) verlagernde Antriebsvorrichtung durch einen pyrotechnischen Aktuator (11), insbesondere einen Mikrogenerator gebildet ist.

6. Überrollschutzsystem für Kraftfahrzeuge nach einem der vorhergehenden Ansprüche, **dadurch gekennzeichnet, dass** das Betätigungselement (10) ein bei dessen Verlagerung aus der Betriebsposition in die Eingriffsposition mit dem Rastelement (7) in Eingriff gelangendes und dieses in die Entriegelungsstellung verlagerndes Stellelement (12) aufweist.

7. Überrollschutzsystem für Kraftfahrzeuge nach einem der vorhergehenden Ansprüche, **dadurch gekennzeichnet, dass** das Stellelement (12) zur Verlagerung des Rastelements (7) an einer der Rastleiste (6) zugewandten Stirnseite (19) des Rastelements (7) anliegt.

8. Überrollschutzsystem für Kraftfahrzeuge nach einem der vorhergehenden Ansprüche, **dadurch gekennzeichnet, dass** das Betätigungselement (10) derart mit dem Sperrelement (9) verbunden ist, dass das Sperrelement (9) relativ gegenüber dem Betätigungselement (10) verstellbar ist.

9. Überrollschutzsystem für Kraftfahrzeuge nach einem der vorhergehenden Ansprüche, **dadurch gekennzeichnet, dass** das Betätigungselement (10) über ein in einer Ausnehmung (14) an dem Sperrelement (9) angeordnetes Kopplungselement, insbesondere eine Lasche (13), mit dem Sperrelement (9) verbunden ist, wobei das Kopplungselement in der Betriebsposition des Betätigungselements (10) und der Blockierlage des Sperrelements (9) an einer in Richtung auf die Eingriffsposition des Betätigungselements (10) angeordneten Innenfläche der Ausnehmung (14) anliegt.

10. Überrollschutzsystem für Kraftfahrzeuge nach einem der vorhergehenden Ansprüche, **dadurch gekennzeichnet, dass** die Ausnehmung (14) derart ausgebildet ist, dass die freie Verschiebbarkeit des Sperrelements (9) gegenüber dem Betätigungselement (10) aus der Blockierlage in die Öffnungslage gegeben ist.

11. Überrollschutzsystem für Kraftfahrzeuge nach einem der vorhergehenden Ansprüche, **dadurch gekennzeichnet, dass** das Betätigungselement (10) in der Betriebsposition lösbar verriegelt ist.

12. Überrollschutzsystem für Kraftfahrzeuge nach einem der vorhergehenden Ansprüche, **dadurch gekennzeichnet, dass** das Sperrelement (9) und das Betätigungselement (10) verschiebbar am Rastelementeträger (8) gelagert sind.

13. Überrollschutzsystem für Kraftfahrzeuge nach einem der vorhergehenden Ansprüche, **dadurch gekennzeichnet, dass** der Rastelementeträger (8) ortsfest und das Betätigungselement (10) und das Sperrelement (9) verschiebbar an einem Grundträger (15) gelagert sind.

14. Überrollschutzsystem für Kraftfahrzeuge nach einem der vorhergehenden Ansprüche, **dadurch gekennzeichnet, dass** das Betätigungselement (10) zur manuellen Bedienung ausgebildet ist, insbesondere Griffelemente (16) aufweist.

## Claims

1. A rollover protection system for motor vehicles with
- a base body (2) arrangeable in a fixed manner to the vehicle,
- a rollover body (3) adjustable with respect to the base body (2) between a storage position and a rollover position,
- a drive unit (4) pretensioning the rollover body (3) in the direction of the rollover position and
- a locking unit (5) locking the rollover body (3) in the storage position with
- a locking element (7) pretensioned in the direction towards a locking rail (6) arranged on the rollover body (3), which is arranged in an adjustable manner on a locking element carrier (8) between a locking position locking the rollover body (3) and an unlocking position releasing the rollover body (3),
**characterized in that**
- a blocking element (9) adjustable between a blocking position immobilizing the locking element (7) in the locking position and an opening position releasing the locking element (7) as well as
- an actuating element (10) adjustable manually between an operating position and an engaging position for displacing the locking element (7) out of the locking position into the unlocking position
are arranged on the locking unit (5),
- wherein the actuating element (10) is connected with the blocking element (9) such that a manual adjustment of the actuating element (10) from the operating position into the engaging position causes a displacement of the blocking element (9) out of the blocking position into the opening position and wherein a driving device (11) is arranged on the blocking element (9) for displacing the blocking element (9) from the blocking position into the opening position.

2. The rollover protection system for motor vehicles according to claim 1, **characterized in that** the locking element (7) and the locking rail (6) are designed such that the rollover body (3) pretensioned in the direction towards the rollover position pretensions the locking element (7) in the locking position in the direction towards the unlocking position.

3. The rollover protection system for motor vehicles according to claim 1 or 2, **characterized in that** the blocking element (9) in the blocking position with a blocking surface (18) rests on a stop surface (17) of the locking element (7) arranged in the locking position and is displaceable, in particular shiftable, with respect to it into the opening position, in which the stop surface (17) and the blocking surface (18) disengage.

4. The rollover protection system for motor vehicles according to one of the preceding claims, **characterized in that** the locking element is formed by a locking latch (7) arranged in a pivotable manner on the locking element carrier (8) and the locking rail by a toothed bar (6), which have a coordinated toothing, wherein the locking latch (7) lies on the blocking surface (18) in the locking position with a stop surface (17) facing away from the toothing.

5. The rollover protection system for motor vehicles according to one of the preceding claims, **characterized in that** the drive device displacing the blocking element (9) is formed by a pyrotechnical actuator (11), in particular a micro-generator.

6. The rollover protection system for motor vehicles according to one of the preceding claims, **characterized in that** the actuating element (10) has a control element (12) engaging with the locking element (7) during its displacement from the operating position into the engaging position and displacing it into the unlocking position.

7. The rollover protection system for motor vehicles according to one of the preceding claims, **characterized in that** the control element (12) for displacing the locking element (7) lies on a front side (19) of the locking element (7) facing the locking bar (6).

8. The rollover protection system for motor vehicles according to one of the preceding claims, **characterized in that** the actuating element (10) is connected with the blocking element (9) such that the blocking element (9) is adjustable relative to the actuating element (10).

9. The rollover protection system for motor vehicles according to one of the preceding claims, **characterized in that** the actuating element (10) is connected with the blocking element (9) via a coupling element, in particular a strap (13), arranged in a recess (14) on the blocking element (9), wherein the coupling element in the operating position of the actuating element (10) and the blocking position of the blocking element (9) lies on an inner surface of the recess (14) arranged in the direction towards the engaging position of the actuating element (10).

10. The rollover protection system for motor vehicles according to one of the preceding claims, **characterized in that** the recess (14) is designed such that the free relocatability of the blocking element (9) with respect to the actuating element (10) from the blocking position into the opening position is established.

11. The rollover protection system for motor vehicles according to one of the preceding claims, **characterized in that** the actuating element (10) is releasably locked in the operating position.

12. The rollover protection system for motor vehicles according to one of the preceding claims, **characterized in that** the blocking element (9) and the actuating element (10) are mounted in a relocatable manner on the locking element carrier (8).

13. The rollover protection system for motor vehicles according to one of the preceding claims, **characterized in that** locking element carrier (8) is mounted in a fixed manner and the actuating element (10) and the blocking element (9) in a relocatable manner on a base support (15).

14. The rollover protection system for motor vehicles according to one of the preceding claims, **characterized in that** the actuating element (10) is designed for manual operation and has in particular handle elements (16).

## Revendications

1. Système de protection contre les tonneaux pour des véhicules automobiles, avec
- un corps de base (2) pouvant être disposé de façon fixe sur le véhicule,
- un corps de capotage (3) déplaçable par rapport au corps de base (2) entre une position de stockage et une position de retournement,
- une unité d'entraînement (4) qui pré-tend le corps de capotage (3) en direction de la position de retournement, et
- une unité de verrouillage (5) qui arrête le corps de capotage (3) dans la position de stockage ; avec
- un élément d'encliquetage (7), pré-tendu en direction d'une barrette d'encliquetage (6) disposée sur le corps de capotage (3), qui est disposé de façon déplaçable sur un support d'élément d'encliquetage (8) entre un emplacement de verrouillage qui arrête le corps de capotage (3) et un emplacement de déverrouillage qui libère le corps de capotage (3),
**caractérisé en ce que**,
sur l'unité de verrouillage (5), il est disposé
- un élément de blocage (9) déplaçable entre une disposition de blocage qui immobilise l'élément d'encliquetage (7) dans l'emplacement de verrouillage et une disposition d'ouverture qui libère l'élément d'encliquetage (7), ainsi
- qu'un élément d'actionnement (10) déplaçable entre une position de fonctionnement et une position de mise en prise pour le transfert de l'élément d'encliquetage (7) à partir de l'emplacement de verrouillage vers l'emplacement de déverrouillage,
- l'élément d'actionnement (10) étant raccordé à l'élément de blocage (9) de telle sorte qu'un déplacement manuel de l'élément d'actionnement (10) à partir de la position de fonctionnement vers la position de mise en prise provoque un transfert de l'élément de blocage (9) à partir de la disposition de blocage vers la disposition d'ouverture, et un dispositif d'entraînement (11) étant disposé sur l'élément de blocage (9) pour le transfert de l'élément de blocage (9) à partir de la disposition de blocage vers la disposition d'ouverture.

2. Système de protection contre les tonneaux pour des véhicules automobiles selon la revendication 1, **caractérisé en ce que**
l'élément d'encliquetage (7) et la barrette d'encliquetage (6) sont constitués de telle sorte que le corps de capotage (3) pré-tendu en direction de la position de retournement pré-tend l'élément d'encliquetage (7) dans l'emplacement de verrouillage en direction de la position de déverrouillage.

3. Système de protection contre les tonneaux pour des véhicules automobiles selon la revendication 1 ou 2, **caractérisé en ce que** l'élément de blocage (9) dans la disposition de blocage est, par une surface de blocage (18), adjacent à une surface de butée (17) de l'élément d'encliquetage (7) disposé dans l'emplacement de verrouillage et peut être transféré, en particulier par coulissement, par rapport à cet élément d'encliquetage, vers la disposition d'ouverture dans laquelle la surface de butée (17) et la surface de blocage (18) se dégagent l'une de l'autre.

4. Système de protection contre les tonneaux pour des véhicules automobiles selon une des revendications précédentes, **caractérisé en ce que** l'élément d'encliquetage est formé par un cliquet d'encliquetage (7) disposé de façon pivotante sur le support d'élément d'encliquetage (8), et **en ce que** la barrette d'encliquetage est formée par une crémaillère (6), le cliquet d'encliquetage et la crémaillère présentant une denture réciproquement adaptée, le cliquet d'encliquetage (7) étant, dans l'emplacement de verrouillage, adjacent à la surface de blocage (18) par une surface de butée (17) éloignée de la denture.

5. Système de protection contre les tonneaux pour des véhicules automobiles selon une des revendications précédentes, **caractérisé en ce que** le dispositif d'entraînement qui transfère l'élément de blocage (9) est formé d'un actionneur (11) pyrotechnique, en particulier un microgénérateur.

6. Système de protection contre les tonneaux pour des véhicules automobiles selon une des revendications précédentes, **caractérisé en ce que** l'élément d'actionnement (10) présente un élément de commande (12) entrant en prise avec l'élément d'encliquetage (7) lors du transfert de l'élément d'actionnement (10) à partir de la position de fonctionnement vers la position de mise en prise et transférant l'élément d'encliquetage (7) dans l'emplacement de déverrouillage.

7. Système de protection contre les tonneaux pour des véhicules automobiles selon une des revendications précédentes, **caractérisé en ce que** l'élément de commande (12) destiné au transfert de l'élément d'encliquetage (7) est adjacent à un côté frontal (19) de l'élément d'encliquetage (7) tourné vers la barrette d'encliquetage (6).

8. Système de protection contre les tonneaux pour des véhicules automobiles selon une des revendications précédentes, **caractérisé en ce que** l'élément d'actionnement (10) est raccordé à l'élément de blocage (9) de telle sorte que l'élément de blocage (9) est déplaçable de façon relative par rapport à l'élément d'actionnement (10).

9. Système de protection contre les tonneaux pour des véhicules automobiles selon une des revendications précédentes, **caractérisé en ce que** l'élément d'actionnement (10) est raccordé à l'élément de blocage (9) par le biais d'un élément de couplage, en particulier une attache (13), disposé dans un creux (14) sur l'élément de blocage (9), l'élément de couplage, dans la position de fonctionnement de l'élément d'actionnement (10) et dans la disposition de blocage de l'élément de blocage (9), étant adjacent à une surface intérieure du creux (14) disposée en direction de la position de mise en prise de l'élément d'actionnement (10).

10. Système de protection contre les tonneaux pour des véhicules automobiles selon une des revendications précédentes, **caractérisé en ce que** le creux (14) est constitué de telle sorte que la libre capacité de coulissement de l'élément de blocage (9) par rapport à l'élément d'actionnement (10) à partir de la disposition de blocage vers la disposition d'ouverture est assurée.

11. Système de protection contre les tonneaux pour des véhicules automobiles selon une des revendications précédentes, **caractérisé en ce que** l'élément d'actionnement (10) est verrouillé de façon détachable dans la position de fonctionnement.

12. Système de protection contre les tonneaux pour des véhicules automobiles selon une des revendications précédentes, **caractérisé en ce que** l'élément de blocage (9) et l'élément d'actionnement (10) sont supportés de façon coulissante sur le support d'élément d'encliquetage (8).

13. Système de protection contre les tonneaux pour des véhicules automobiles selon une des revendications précédentes, **caractérisé en ce que** le support d'élément d'encliquetage (8) est supporté de façon fixe, et l'élément d'actionnement (10) et l'élément de blocage (9) sont supportés de façon coulissante sur un support de base (15).

14. Système de protection contre les tonneaux pour des véhicules automobiles selon une des revendications précédentes, **caractérisé en ce que** l'élément d'actionnement (10) est constitué pour la manoeuvre manuelle, en particulier présente des éléments de préhension (16).
